# EUROPÄISCHE PATENTSCHRIFT

(11) **EP 4 410 166 B1**
(45) Veröffentlichungstag und Bekanntmachung des Hinweises auf die Patenterteilung: **11.03.2026**
(21) Anmeldenummer: 24151002.3
(22) Anmeldetag: 09.01.2024
(51) Int. Cl.: A47L 9/00

(54) **VERFAHREN ZUM BETRIEB EINES MOBILEN, SELBSTFAHRENDEN GERÄTS**
METHOD FOR OPERATING A MOBILE SELF-PROPELLED DEVICE
PROCÉDÉ DE FONCTIONNEMENT D'UN ENGIN MOBILE AUTOMOTEUR

(30) Priorität: 01.02.2023 DE 102023200824
(43) Veröffentlichungstag der Anmeldung: 07.08.2024
(73) Patentinhaber: BSH Hausgeräte GmbH, 81739 München (DE)
(72) Erfinder: Daniel, Kristina, 97616 Bad Neustadt (DE); Schnitzer, Frank, 97616 Bad Neustadt (DE); Wittkowski, Josephine, 83278 Traunstein (DE)

(56) Entgegenhaltungen:
- US-A1- 2016 161 945
- US-A1- 2021 260 773
- US-B2- 10 394 246

## Beschreibung

Die Erfindung betrifft ein Verfahren zum Betrieb eines mobilen, selbstfahrenden Geräts, insbesondere eines Bodenreinigungsgeräts, wie einen Saug-, Wisch- und/oder Kehrroboter, der einen Tastsensor umfasst, sowie ein mobiles, selbstfahrendes Gerät, das nach einem derartigen Verfahren betrieben wird.

Reinigungsroboter, wie beispielsweise Saugroboter, werden mit digitalen Features und intelligenten Algorithmen immer autonomer. Funktionen zur gezielten Auswahl einzelner zu reinigender Räume, programmierbare Reinigungszeitpläne, ereignisbasierte Programmausführungen mittels IFTTT ("if this than that") und die Vernetzung mit anderen Smart-Home-Geräten versetzen die Saugroboter in die Lage, auch ohne Nutzereingriff die Wohnung sauber zu halten. Beispiele sind aus der US 2016/161945 A1, US 10 394 246 B2 und US 2021/260773 A1 bekannt.

Nicht immer entspricht jedoch diese Automatisierung dem aktuellen Befinden des Nutzers. Beispielsweise ist der Nutzer bei sonstiger Abwesenheit spontan zu Hause, während eine automatisierte Reinigung durch den Saugroboter startet. Auch kann das Zusammenspiel zwischen Saugroboter und Smart-Home-Geräten dazu führen, dass der Saugroboter dorthin zur Reinigung geschickt wird, wo der Nutzer gerade in Ruhe arbeiten will. Ein Abbrechen des Reinigungsvorgangs erfordert dabei die Bedienung des Saugroboters am lokalen User Interface am Roboter oder die Bedienung über eine App an einem Smartphone oder Tablet. Es ist allerdings möglich, dass der Nutzer sein mobiles Endgerät nicht zur Hand hat oder er sich zum aktuellen Zeitpunkt nicht zum Roboter bücken kann oder will.

Auch für das manuelle Starten eines neuen Reinigungsvorgangs, der außerhalb des festgelegten Zeitplans erfolgen soll, stehen dem Nutzer nur die eben beschriebenen Mittel zur Verfügung, sodass der Nutzer zwingend eines der genannten Bedienelemente wie lokales User Interface, App, mit der App verknüpften Sprachsteuerungsassistenten oder ähnliches nutzen muss. Somit hat der Nutzer keine Möglichkeit, auf eine unkomplizierte, einfache Art, die jederzeit dem Nutzer zur Verfügung steht, eine spontane Reinigung zu beginnen und/oder abzubrechen.

Häufig kommt es vor, dass ein Nutzer bei einem Stören durch den Saugroboter mit dem Fuß gegen diesen tritt. Damit soll dem Roboter mitgeteilt werden, dass er derzeit in diesem Raum unerwünscht ist. Der Saugroboter geht aufgrund dieser Kollision jedoch lediglich davon aus, dass ein Hindernis im Weg ist, womit der Roboter versucht, einen Umweg zu fahren, um das Hindernis zu umfahren und die Reinigung fortzusetzen. Dieses Verhalten führt zu einer fortgesetzten Störung des Nutzers. Durch wiederkehrende Tritte und dadurch bedingte wiederkehrende Kollisionen besteht zudem die Gefahr, dass vom Roboter im Raum ein vermeintliches permanentes Hindernis detektiert und in seiner Umgebungskarte eingetragen wird, womit dort vom Roboter bei zukünftigen Reinigungsfahrten keine Reinigungstätigkeit durchgeführt wird.

Aufgabe der Erfindung ist es, ein Verfahren zum Betrieb eines mobilen, selbstfahrenden Geräts bereitzustellen, bei dem es dem Nutzer auf einfachem Wege möglich ist, einem mobilen, selbstfahrenden Gerät einen spontanen Nutzerbefehl zu übermitteln, indem insbesondere ein bereits vorhandener Tastsensor neben einer Kollisionserkennung eine weitere Funktion übernimmt.

Diese Aufgabe wird durch ein Verfahren zum Betrieb eines mobilen, selbstfahrenden Geräts mit den Merkmalen des Anspruchs 1 sowie durch ein mobiles, selbstfahrendes Gerät mit den Merkmalen des Anspruchs 9 gelöst. Vorteilhafte Ausgestaltungen und Weiterbildungen sind Gegenstand der Unteransprüche.

Erfindungsgemäß weist bei einem Verfahren zum Betrieb eines mobilen, selbstfahrenden Geräts, insbesondere eines Bodenreinigungsgeräts, wie ein Saug- und/oder Kehr- und/oder Wischroboter, das mobile-selbstfahrende Gerät zumindest einen Tastsensor auf, der zur Kollisionserkennung des mobilen, selbstfahrenden Geräts mit Hindernissen vorgesehen ist, und der neben der Kollisionserkennung zumindest einen Nutzerbefehl auslöst, wenn ein Nutzer in einer vorbestimmten Zeitspanne n-mal gegen Tastsensor drückt, wobei n>1 ist.

Vorliegend wird durch ein vordefiniertes Betätigen des bereits im Gerät vorhandenen Tastsensors gezielt ein einprogrammierter Nutzerbefehl ausgeführt. Der Tastsensor übernimmt also neben einer reinen Kollisionserkennung eine weitere Aufgabe. Dadurch ist es dem Nutzer möglich, ohne auf sein Smartphone zugreifen zu müssen, dem Gerät den einprogrammierten Nutzerbefehl zu übermitteln und beispielsweise einen Auftrag zu beenden, zum Beispiel für den aktuellen Raum oder für die gesamte Wohnung, und/oder zu starten. Mit Vorteil kann der Nutzer durch Antippen von mindestens einem Bereich des Tastsensors gezielt signalisieren, dass das Gerät im Moment bei seiner Reinigung in dem gerade zu reinigenden Raum unerwünscht ist. Dem Gerät wird insbesondere ein "Go-Away"-Signal gegeben. Alternativ kann der Nutzer durch Antippen des Tastsensors dem Gerät einen Startbefehl für einen Reinigungsvorgang übermitteln. An dem Gerät wird also durch gezieltes Betätigen des Tastsensors ein Reinigungsvorgang initiiert.

Stößt das Gerät im Normalfall auf ein Hindernis, welches es zuvor nicht zum Beispiel mit seinem Navigationssensor erfasst hat, so wird der Tastsensor gedrückt und gibt ein Signal ab. Dem Gerät ist dadurch klar, dass es eine Kollision gab, und wird im Folgenden versuchen, das Hindernis zu umfahren. Tippt ein Nutzer nun lediglich einmal gegen den Tastsensor, so erkennt das Gerät nicht, dass dies als Nutzerbefehl zu interpretieren ist. Das Gerät weicht aus und sucht einen Umweg, um das vermeintlich vor ihm liegende Hindernis zu umfahren.

Erfindungsgemäß tippt der Nutzer daher mindestens zweimal kurz nacheinander gegen mindestens einen Bereich des Tastsensors, sodass das Gerät erkennt, dass diese Signale unmöglich durch Kollisionen aufgrund seiner Eigenbewegung entstanden sein können. Dadurch ist es möglich, diese Signale als Nutzerbefehl an das Gerät zu interpretieren. Das Gerät unterscheidet demnach zwischen Kollisionsereignis (bei einem einmaligen Antippen/Anfahren des Geräts) und Nutzerbefehl (bei einem mehrmaligen Antippen/Anfahren des Geräts innerhalb einer kurzen und gegebenenfalls definierten Zeitspanne).

Durch das erfindungsgemäße Verfahren wird dem Nutzer eine intuitive, einfache und bequeme Steuerung für das Gerät ermöglicht. Hierfür müssen am Gerät keine zusätzlichen Sensoren verbaut werden. Der bereits im Gerät vorhandene Tastsensor wird hierzu genutzt. Dem Nutzer wird eine weitere Bedienmöglichkeit für das Gerät zur Verfügung gestellt, für die er keine zusätzliche Technik wie beispielsweise Smartphone, Sprachsteuerung, One-Push-Button oder ähnliches, oder erweiterte Bedienkenntnisse benötigt. Der Nutzer kann auf einfachem Wege die Reinigungsprozedur anpassen, falls er sich durch den Reinigungsvorgang gestört fühlt. Zudem kann der Nutzer bei Bedarf die durch die Tastsensorenbedienung gesteuerten Aktionen gegebenenfalls konfigurieren und an seine Bedürfnisse anpassen.

Unter einem mobilen, selbstfahrenden Gerät ist insbesondere ein Bodenreinigungsgerät, zu verstehen, welches beispielsweise im Haushaltsbereich Bodenflächen autonom bearbeitet. Hierunter zählen unter anderem Saug- und/oder Kehr- und/oder Wischroboter wie beispielsweise Staubsaugerroboter, oder Rasenmäherroboter. Diese Geräte arbeiten im Betrieb (Reinigungsbetrieb) bevorzugt ohne oder mit möglichst wenig Nutzereingriff. Beispielsweise fährt das Gerät selbsttätig in einen vorgegebenen Raum, um entsprechend einer vorgegebenen und einprogrammierten Verfahrensstrategie den Boden zu reinigen.

Um hierbei jegliche individuellen Umgebungsbesonderheiten beachten zu können, findet bevorzugt eine Explorationsfahrt mit dem mobilen, selbstfahrenden Gerät statt. Unter einer Explorationsfahrt ist insbesondere eine Erkundungsfahrt zu verstehen, die dazu geeignet ist, eine zu bearbeitende Bodenfläche nach Hindernissen, Raumaufteilung und ähnlichem zu erkunden. Ziel einer Explorationsfahrt ist es insbesondere, Gegebenheiten des zu bearbeitenden Bodenbearbeitungsbereichs einschätzen und/oder darstellen zu können.

Nach der Explorationsfahrt kennt das mobile, selbstfahrende Gerät seine Umgebung und kann diese in Form einer Umgebungskarte in einer App auf dem Mobilgerät für den Nutzer bereitstellen. In der Umgebungskarte kann dem Nutzer die Möglichkeit gegeben werden, mit dem mobilen, selbstfahrenden Gerät zu interagieren. Der Nutzer kann mit Vorteil Informationen in der Umgebungskarte einsehen und bei Bedarf ändern und/oder anpassen.

Unter einer Umgebungskarte ist insbesondere jegliche Karte zu verstehen, die geeignet ist, die Umgebung des Bodenbearbeitungsbereichs mit all seinen Hindernissen und Gegenständen darzustellen. Beispielsweise zeigt die Umgebungskarte den Bodenbearbeitungsbereich mit den darin enthaltenen Möbeln und Wänden skizzenartig an.

Die Umgebungskarte mit den Hindernissen wird vorzugsweise in der App an einem tragbaren Zusatzgerät dargestellt. Dies dient insbesondere der Visualisierung zu einer möglichen Interaktion für den Nutzer. Unter einem Zusatzgerät ist vorliegend insbesondere jegliches Gerät zu verstehen, das für einen Benutzer tragbar ist, das außerhalb des mobilen, selbstfahrenden Geräts angeordnet, insbesondere extern und/oder differenziert vom mobilen, selbstfahrenden Gerät ist, und zu einer Anzeige, Bereitstellung, Übermittlung und/oder Übertragung von Daten geeignet ist, wie beispielsweise ein Handy, ein Smartphone, ein Tablet und/oder ein Computer beziehungsweise Laptop.

Auf dem tragbaren Zusatzgerät ist die App, insbesondere eine Steuerungs-App, installiert, die zur Kommunikation des mobilen, selbstfahrenden Geräts mit dem Zusatzgerät dient und insbesondere eine Visualisierung des Bodenbearbeitungsbereichs, also des zu reinigenden Wohnraums oder der zu reinigenden Wohnung beziehungsweise des Wohnbereichs ermöglicht. Die App zeigt dem Nutzer dabei vorzugsweise den zu reinigenden Bereich als Umgebungskarte an.

Unter Hindernissen sind insbesondere jegliche im Bodenbearbeitungsbereich sich aufhaltende Objekte wie beispielsweise Möbel, Geräte, Kleidung, Spielsachen, Tierbedarf, und ähnliches zu verstehen. Die Hindernisse werden dabei von dem Gerät beispielsweise mittels zumindest eines Sensors, vorzugsweise eines Lidar-Sensors und/oder des Tastsensors oder einem optischen Sensor wie eine Kamera detektiert. Der Lidar-Sensor vermisst im Betrieb vorzugsweise eine Ebene etwa 10 cm über dem Boden mit einem 360°-Sichtfeld. Der Lidar-Sensor kann so insbesondere Wände und andere Hindernisse erkennen.

Zusätzlich verfügt das Gerät über den Tastsensor, bevorzugt einen Anstoßsensor, der vorzugsweise in Form einer Stoßstange an einer Front des Geräts platziert ist und bei Kontakt mit Hindernissen und Gegenständen kleine Tastermittler aktiviert, die auf die Kollision hinweisen. Dadurch erfolgt eine Kollisionserkennung. Bei einer Reinigungsfahrt des Geräts können also mittels Kollision am Tastsensor insbesondere kleine/niedrige Hindernisse im Umgebungsbereich erkannt und umfahren werden. Vorzugsweise ist der Tastsensor ein Bumper.

Unter einem Nutzerbefehl ist jeglicher Befehl eines Nutzers zu verstehen, der das Fahrverhalten und/oder die Reinigungstätigkeit des Geräts beeinflusst, insbesondere ändert. Beispielsweise ändert der Nutzerbefehl die Fahrtrichtung, den Reinigungspfad und/oder den Reinigungsbereich, stoppt den Reinigungsvorgang und/oder startet diesen. Der Nutzerbefehl ist dabei vorab vordefiniert/ einprogrammiert. Das bedeutet, dass dem Gerät (durch den Nutzer oder bereits bei seiner Herstellung) vorgegeben wird, was es auszuführen hat, falls dieser Nutzerbefehl ausgelöst wird, beispielsweise das Abbrechen oder Starten eines Reinigungsprogramms innerhalb eines Bereiches oder der kompletten Wohnung.

Unter einer vorbestimmten Zeitspanne ist insbesondere eine Zeitdauer zu verstehen, die eine maximal vordefinierte Dauer nicht übersteigt. Die vorbestimmte Zeitspanne wird also definiert zwischen 0 sec als Minimalwert und einem maximal vordefinierten Schwellenwert Tₘₐₓ als Maximalwert. Übersteigt der Zeitabstand zwischen dem ersten und dem zweiten Drücken des Tastsensors den Maximalwert Tₘₐₓ, so wird der Nutzerbefehl nicht ausgelöst. Fällt das zweite Drücken des Tastsensors dagegen zwischen 0 sec und Tₘₐₓ, also unterschreitet der Zeitabstand zwischen dem ersten und dem zweiten Drücken den Maximalwert Tₘₐₓ, so wird dies als einprogrammierter Nutzerbefehl erkannt und ausgelöst.

Unter einem n-maligen Drücken gegen den Tastsensor, wobei n>1 ist, ist insbesondere ein mehrmaliges, also wiederholendes Drücken des Tastsensors durch den Nutzer zu verstehen. Dabei ist es notwendig, dass das mehrmalige Drücken die vorbestimmte Zeitspanne nicht überschreitet, da ansonsten der Nutzerbefehl nicht als solcher vom Gerät erkannt wird. Das Drücken hat demnach kurz hintereinander zu erfolgen, damit der Nutzerbefehl ausgeführt wird.

Bei einer vorteilhaften Ausführungsform ist die vorbestimmte Zeitspanne derart gering, dass Kollisionsereignisse mit Hindernissen ausgeschlossen werden können. Dem Gerät muss es insbesondere möglich sein, zwischen einer eventuellen mehrmaligen Kollision mit einem oder mehreren Hindernissen und einem bewussten und gezielten Auslösen des Nutzerbefehls zu unterscheiden. Dazu tippt der Nutzer beispielsweise zweimal kurz nacheinander auf vorzugsweise dieselbe Stelle des Tastsensors, sodass das Gerät erkennt, dass diese Signale unmöglich durch Kollisionen aufgrund seiner Eigenbewegung entstanden sein können. Diese Signale werden daher als Nutzerbefehl an das Gerät vom Gerät interpretiert.

Zum Beispiel tippt der Nutzer den Tastsensor des Geräts mindestens ein weiteres Mal an, wenn das Gerät nach dem ersten Antippen stoppt und rückwärtsfährt, um auszuweichen. Im Stand oder beim Rückwärtsfahren wird der Wechsel von "Kollision erkannt" (erstes Antippen), "Kollision ist verschwunden" (Stand oder Rückwärtsfahren) und "Kollision wieder erkannt" (zweites Antippen) vom Gerät als nicht durch ein unbewegliches Hindernis entstanden interpretiert und daher als Nutzerbefehl eingeordnet.

Bei einer weiteren vorteilhaften Ausführungsform ist der Nutzerbefehl ein Abbrechen des Reinigungsauftrags und/oder ein Beginnen beziehungsweise Starten eines einprogrammierten Reinigungsauftrags oder Beginnen der Reinigung aller erreichbarer Räume beziehungsweise des gesamten erreichbaren Bodens ("Clear All"). Beispielsweise ist der einprogrammierte Nutzerbefehl ein vollständiges Abbrechen des Reinigungsauftrags. Alternativ kann der vorprogrammierte Nutzerbefehl ein ledigliches Abbrechen des Reinigungsauftrags in einem aktuellen Raum, also dem Raum, in dem sich das Gerät bei Auslösen des Nutzerbefehls befindet, sein. Sind weitere Räume in einer Abarbeitungsliste des derzeitigen Reinigungsauftrags vorhanden, so wechselt das Gerät in den nächsten Raum und setzt dort seine Reinigung fort. Sind keine weiteren Räume mehr zu reinigen oder wird ein vollständiger Abbruch ausgelöst, so beendet das Gerät den Reinigungsauftrag und kehrt zu seiner Basisstation zurück. Alternativ kann das Gerät den ausgelassenen Raum an die letzte Position der Abarbeitungskiste setzen oder ihn für eine separate Reinigung zu einem späteren Zeitpunkt vormerken. Das Gerät führt also ein automatisches Umplanen der Abarbeitungsliste beziehungsweise Abarbeitungsreihenfolge durch, sodass eine vollständige Reinigung gewährleistet werden kann.

Bei einer weiteren vorteilhaften Ausführungsform werden abhängig von der Anzahl n des Drückens des Tastsensors jeweils unterschiedliche Nutzerbefehle ausgeführt. Beispielsweise wird bei einem zweimaligen Drücken des Tastsensors die Reinigung des aktuellen Raums abgebrochen, wohingegen bei einem dreimaligen Drücken der gesamte Reinigungsauftrag abgebrochen wird. Auch können zum Beispiel über festgelegte Tippsequenzen Reinigungsvorgänge gestartet werden. Steht das Gerät zum Beispiel an seiner Basisstation, und tippt der Nutzer zweimal gezielt gegen die Mitte des Tastsensors, so startet das Gerät die Reinigung eines bestimmten Raumes oder der kompletten Wohnung.

Ist das Gerät im Stillstand und/oder befindet es sich an seiner Basisstation, und bekommt das Gerät das Signal, dass innerhalb der vorbestimmten Zeitspanne der Tastsensor n-mal betätigt wurde, geht das Gerät von dem Aktivieren des Nutzerbefehls aus, da im Normalfall keine Hinderniserkennung durch den Tastsensor während des Parkens an der Basisstation oder im Stillstand erfolgt. So kann der Nutzer dem Gerät intuitiv, einfach und bequem ein Startkommando geben.

Bei einer weiteren vorteilhaften Ausführungsform werden abhängig vom Tastsensorbereich, an dem das Drücken erfolgt, jeweils unterschiedliche Nutzerbefehle ausgeführt. Beispielsweise wird der Tastsensor in Bereiche "linke Seite" / "Mitte" / "rechte Seite" eingeteilt, und abhängig vom Bereich des Drückens werden unterschiedliche Nutzerbefehle ausgelöst.

Vorzugsweise ist es dem Nutzer möglich, selbst beispielsweise über die Einstellungen innerhalb der App festzulegen, welches Kommando beziehungsweise welcher Nutzerbefehl auszuführen ist, wenn n-mal gegen die Mitte, den rechten und/oder linken Tastsensorbereich getippt wird. Dadurch ist eine individuelle und einfache Bedienung und Anpassung an die Nutzerbedürfnisse möglich.

Weiter betrifft die Erfindung ein mobiles, selbstfahrendes Gerät, das wie oben beschrieben betrieben wird, und einen Tastsensor umfasst, der dazu ausgebildet ist, neben einer Kollisionserkennung zumindest einen Nutzerbefehl auszulösen, wenn ein Nutzer in einer vorbestimmten Zeitspanne n-mal gegen den Tastsensor drückt, wobei n>1 ist.

Jegliche Merkmale, Ausgestaltungen, Ausführungsformen und Vorteile das Verfahren betreffend finden auch in Zusammenhang mit dem erfindungsgemäßen Gerät Anwendung, und umgekehrt.

Die Erfindung wird anhand der nachfolgenden, lediglich Beispiele darstellenden Ausführungen der Erfindung näher erläutert. Es zeigen:
- Figur 1:: eine schematische Ansicht eines Ausführungsbeispiels eines mobilen, selbstfahrenden Geräts, das nach dem erfindungsgemäßen Verfahren betrieben wird, und
- Figuren 2A, 2B: jeweils ein Ablaufdiagramm betreffend ein Ausführungsbeispiel eines erfindungsgemäßen Betriebsverfahrens.

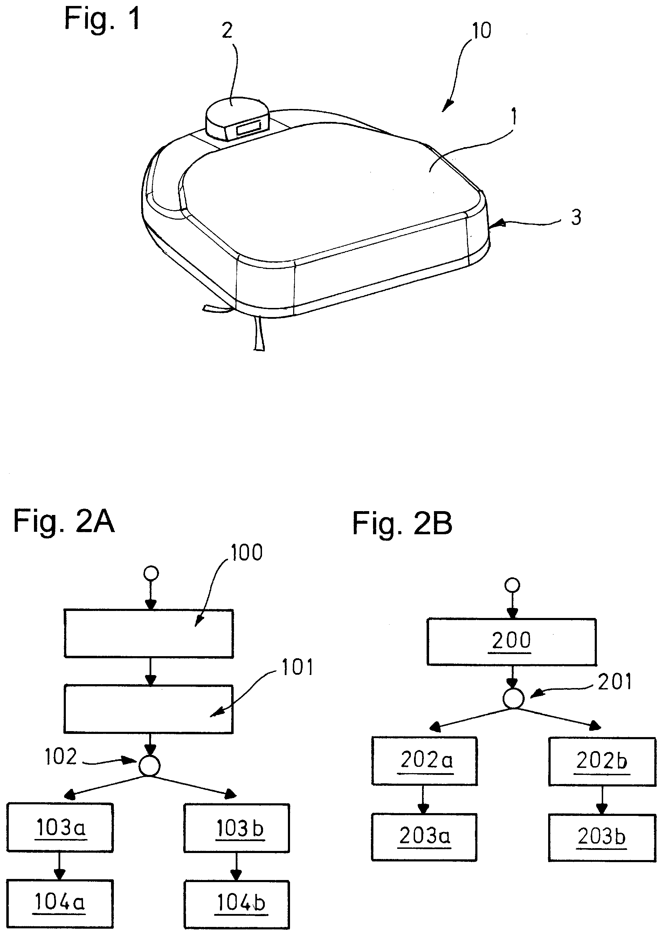

Figur 1 zeigt eine dreidimensionale Ansicht eines mobilen, selbstfahrenden Geräts 10, insbesondere eines Saugroboters, der ein Gerätegehäuse 1 umfasst, das eine D-Form aufweist. Insbesondere weist der Gehäusekörper 1 eine vordere gerade Form und eine hintere runde oder gebogene Form auf. In einem hinteren Bereich ist ein Lidar-Sensor 2 auf dem Gehäusekörper 1 insbesondere mittig platziert. Mit dem Lidar-Sensor 2 kann der Saugroboter eine horizontale Ebene etwa 10 cm über dem Boden mit einem 360°-Sichtfeld vermessen. Insbesondere werden mit dem Lidar-Sensor Wände, Hindernisse und andere Gegenstände erkannt und in einer Umgebungskarte integriert.

Hindernisse, die nur eine geringe Höhe aufweisen, können nicht vom Lidar-Sensor 2 detektiert beziehungsweise erkannt werden. Um Hindernisse und Gegenstände in geringer Höhe von insbesondere weniger als 10 cm über dem Boden zu detektieren, findet ein Tastsensor 3, beispielsweise ein Anstoßsensor, insbesondere ein Bumper, Verwendung. Dieser ist in Form einer Stoßstange an der geraden Front des Saugroboters platziert. Bei Kontakt des Bumpers mit Objekten, Gegenständen und Hindernissen werden kleine Tastermittler aktiviert, die auf eine Kollision hinweisen. Dadurch erfolgt eine Kollisionserkennung. Bei einer Reinigungsfahrt des Geräts 10 können also mittels Kollision am Bumper Hindernisse im Umgebungsbereich erkannt und umfahren werden.

Erfindungsgemäß übernimmt der Bumper des Geräts 10 zusätzlich zur Kollisionserkennung eine weitere Funktion. Insbesondere löst der Bumper einen einprogrammierten Nutzerbefehl aus, wenn der Nutzer n-mal (n>1) gegen den Bumper tippt. Um den einprogrammierten Nutzerbefehl zu übermitteln, ist also insbesondere kein Smartphone notwendig, an dem der Nutzer seinen Befehl aktiviert. Beispielsweise kann der Nutzer dem Gerät 10 mit dem Fuß ein "Go-Away"-Signal geben oder durch gezielte Betätigung des Bumpers einen Reinigungsvorgang initiieren.

In den Figuren 2A, 2B ist jeweils ein Ablaufdiagramm eines Betriebsverfahrens eines mobilen, selbstfahrenden Geräts, wie es beispielsweise in Figur 1 dargestellt ist, gezeigt. Figur 2A zeigt ein Ablaufverfahren, wenn sich ein Nutzer durch das Gerät gestört fühlt, und durch Antippen gegen den Bumper die Reinigung des aktuellen Raumes oder des gesamten Reinigungsauftrags abbricht.

In Schritt 100 startet der Saugroboter einen Reinigungsauftrag, der mindestens einen Raum umfasst. Nacheinander werden die Räume des Reinigungsauftrags vom Saugroboter gereinigt (Schritt 101). In einem der Räume fühlt sich der Nutzer vom Saugroboter durch seine Reinigungstätigkeit gestört (Punkt 102) und möchte diese beenden. Dazu tippt der Nutzer zweimal nacheinander gegen den Bumper des Saugroboters (Schritt 103a). Der Saugroboter bricht aufgrund dieses Nutzerbefehls die Reinigung des aktuell zu reinigenden Raumes ab und fährt zum nächsten Raum in der Abarbeitungsliste (Schritt 104b). Will der Nutzer nicht nur die Reinigung des aktuellen Raumes beenden, sondern den gesamten aktuellen Reinigungsauftrag für alle Räume, so tippt er im Schritt 103b dreimal nacheinander gegen den Bumper des Saugroboters. Daraufhin bricht der Saugroboter den gesamten Reinigungsauftrag ab und fährt direkt zurück zu seiner Basisstation (Schritt 104b).

Vorliegend kann der Nutzer also über verschiedene Tipp- oder Drücksequenzen das weitere Vorgehen des Saugroboters beeinflussen. Die Abstände zwischen den Tipphandlungen des Nutzers müssen dabei kurzgehalten sein, sodass der Saugroboter unterscheiden kann zwischen vermeintlichen Kollisionen mit Hindernissen und Nutzerbefehl.

In Figur 2b ist ein Ablaufverfahren gezeigt, bei dem der Nutzer einen Reinigungsvorgang möglichst unkompliziert starten will, ohne sein Smartphone zu benutzen, und dies durch Antippen des Bumpers realisiert. Anfänglich befindet sich der Saugroboter an seiner Basisstation und ist im Stillstand (Schritt 200). Zum Zeitpunkt 201 möchte der Nutzer einen Reinigungsauftrag starten, zum Beispiel, weil der Boden verdreckt ist oder etwas ausgeschüttet worden ist. Tippt nun der Nutzer im Schritt 202a zweimal nacheinander innerhalb einer bestimmten kleinen Zeitspanne gegen die Mitte des Bumpers des Saugroboters, so bekommt der Saugroboter das Signal, einen Reinigungsauftrag für die gesamte Wohnung zu starten (Schritt 203a). Tippt der Nutzer dagegen im Schritt 202b zweimal nacheinander innerhalb einer bestimmten kleinen Zeitspanne gegen die Seite des Bumpers des Saugroboters, so bekommt der Saugroboter das Signal, einen Reinigungsauftrag lediglich für den aktuellen Raum zu starten (Schritt 203b).

Sowohl abhängig von der Tippsequenz (2-mal/3-mal/n-mal) als auch abhängig von dem Tippbereich am Bumper (Mitte/Seite) können somit unterschiedliche Nutzerbefehle ausgelöst werden. Hierzu kann dem Nutzer vorzugsweise die Möglichkeit gegeben werden, beispielsweise über Einstellungen innerhalb der Reinigungs-App festzulegen, welches Kommando beziehungsweise welcher Befehl ausgeführt werden soll, wenn n-mal gegen die Mitte oder den rechten/ linken Bumperbereich getippt wird, womit die Nutzerbefehle an die Nutzerbedürfnisse individuell angepasst werden können.

## Patentansprüche

1. Verfahren zum Betrieb eines mobilen, selbstfahrenden Geräts (10), insbesondere eines Bodenreinigungsgeräts, wie ein Saug- und/oder Kehr- und/oder Wischroboter, wobei das mobile-selbstfahrende Gerät (10) zumindest einen Tastsensor (3) aufweist, der zur Kollisionserkennung des mobilen, selbstfahrenden Geräts (10) mit Hindernissen vorgesehen ist, und dadurch gekennzeichent ist,
dass der Tastensensor (3) neben der Kollisionserkennung zumindest einen Nutzerbefehl auslöst, wenn ein Nutzer in einer vorbestimmten Zeitspanne n-mal gegen den Tastsensor (3) drückt, wobei n>1 ist.

2. Verfahren nach Anspruch 1, wobei der Tastsensor (3) ein Bumper ist.

3. Verfahren nach einem der vorhergehenden Ansprüche, wobei die vorbestimmte Zeitspanne derart gering ist, dass Kollisionsereignisse mit Hindernissen ausgeschlossen werden können.

4. Verfahren nach einem der vorhergehenden Ansprüche, wobei der Nutzerbefehl ein Abbrechen des Reinigungsauftrags ist.

5. Verfahren nach einem der vorhergehenden Ansprüche, wobei der Nutzerbefehl ein Abbrechen des Reinigungsauftrags in einem aktuellen Raum ist.

6. Verfahren nach einem der vorhergehenden Ansprüche, wobei der Nutzerbefehl ein Beginnen eines einprogrammierten Reinigungsauftrags ist.

7. Verfahren nach einem der vorhergehenden Ansprüche, wobei abhängig von der Anzahl n des Drückens des Tastsensors (3) jeweils unterschiedliche Nutzerbefehle ausgeführt werden.

8. Verfahren nach einem der vorhergehenden Ansprüche, wobei abhängig von einem Tastsensorbereich, an dem das Drücken erfolgt, jeweils unterschiedliche Nutzerbefehle ausgeführt werden.

9. Mobiles, selbstfahrendes Gerät, das nach einem der vorhergehenden Ansprüche betrieben wird, und einen Tastsensor (3) umfasst, der dazu ausgebildet ist, neben einer Kollisionserkennung zumindest einen Nutzerbefehl auszulösen, wenn ein Nutzer in einer vorbestimmten Zeitspanne n-mal gegen den Tastsensor (3) drückt, wobei n>1 ist.

## Claims

1. Method for operating a mobile, self-propelled device (10), in particular a floor cleaning device, such as a suction and/or mopping and/or sweeping robot, wherein the mobile, self-propelled device (10) has at least one touch sensor (3) provided for collision detection of obstacles of the mobile, self-propelled device (10), and is **characterised in that**, in addition to collision detection, the touch sensor (3) triggers at least one user command if a user presses the touch sensor (3) n times in a predetermined time period, wherein n>1.

2. Method according to claim 1, wherein the touch sensor (3) is a bumper.

3. Method according to one of the preceding claims, wherein the predetermined time period is short enough to preclude collisions with obstacles.

4. Method according to one of the preceding claims, wherein the user command is a termination of the cleaning task.

5. Method according to one of the preceding claims, wherein the user command is a termination of the cleaning task in a current space.

6. Method according to one of the preceding claims, wherein the user command is a starting of a programmed cleaning task.

7. Method according to one of the preceding claims, wherein different user commands are executed in each case as a function of the number n of times the touch sensor (3) is pressed.

8. Method according to one of the preceding claims, wherein different user commands are executed in each case as a function of a touch sensor region which is pressed.

9. Mobile, self-propelled device which is operated according to one of the preceding claims, and which comprises a touch sensor (3) which is designed, in addition to collision detection, to trigger at least one user command if a user presses the touch sensor (3) n times in a predetermined time period, wherein n>1.

## Revendications

1. Procédé de fonctionnement d'un appareil mobile automoteur (10), en particulier d'un appareil de nettoyage de sol, comme un robot aspirateur et/ou balayeuse mécanique et/ou robot nettoyeur, dans lequel l'appareil mobile automoteur (10) comprend au moins un détecteur palpeur (3), lequel est configuré pour une reconnaissance de collision de l'appareil mobile automoteur (10) avec des obstacles, et est **caractérisé en ce que** le détecteur palpeur (3) déclenche outre la reconnaissance de collision au moins une instruction d'utilisateur quand un utilisateur appuie dans un délai prédéterminé n fois sur le détecteur palpeur (3), n étant >1.

2. Procédé selon la revendication 1, dans lequel le détecteur palpeur (3) est un pare-chocs.

3. Procédé selon l'une des revendications précédentes, dans lequel le délai prédéterminé est réduit de sorte que les événements de collision avec des obstacles peuvent être exclus.

4. Procédé selon l'une des revendications précédentes, dans lequel l'instruction d'utilisateur est une interruption de la commande de nettoyage.

5. Procédé selon l'une des revendications précédentes, dans lequel l'instruction d'utilisateur est une interruption de la commande de nettoyage dans un espace actuel.

6. Procédé selon l'une des revendications précédentes, dans lequel l'instruction d'utilisateur est le début d'une commande de nettoyage introduite par programmation.

7. Procédé selon l'une des revendications précédentes, dans lequel, en fonction d'un nombre n de pressions sur le détecteur palpeur (3), des instructions d'utilisateur à chaque fois différentes sont exécutées.

8. Procédé selon l'une des revendications précédentes, dans lequel, en fonction de la zone du détecteur palpeur sur laquelle a lieu la pression, des instructions d'utilisateur à chaque fois différentes sont exécutées.

9. Appareil mobile automoteur, lequel fonctionne selon l'une des revendications précédentes et comprend un détecteur palpeur (3), lequel est configuré pour déclencher outre la reconnaissance de collision au moins une instruction d'utilisateur, quand un utilisateur appuie dans un délai prédéterminé n fois sur le détecteur palpeur (3), n étant >1.
